# EUROPEAN PATENT APPLICATION

(11) **EP 3 323 520 A1**
(43) Date of publication of application: **23.05.2018**
(21) Application number: 17202271.7
(22) Date of filing: 17.11.2017
(51) Int. Cl.: B21C 29/00, B23D 45/00, B21C 33/00

(54) **COMPACT DEVICE FOR RE-LOADING METAL LOGS INTO A FURNACE**

(30) Priority: 22.11.2016 IT 201600118161
(71) Applicant: Turla S.r.l., 25050 Paderno Franciacorta (BS) (IT)
(72) Inventor: TURLA, Davide, 25069 Villa Carcina (BS) (IT)
(74) Representative: Mittler, Andrea

(57) **Abstract**

The device (2) for re-loading metal logs (6) into a furnace comprises a pusher bar (21) adapted to come into contact with said metal logs (6). Said pusher bar (21) is integral with a movable arm (22), rotatably connected to a slide (23). Said slide (23) is slidable on sliding guides (24) by means of a hydraulic cylinder (20). Said device (2) further comprises detachment means (3) adapted to grasp and move the metal logs (6) independently of said slide (23).

## Description

The present invention relates to a compact device for re-loading metal logs into a furnace.

The extrusion process of metal section bars provides that a billet, namely a portion of a metal log, is pressed into a die of various shapes or sizes to obtain the desired section bar.

The billet is obtained from long cylindrical metal bars, called "logs", of the length of 7 to 8 meters, which are cut into smaller portions so as to be loaded onto a press and extruded.

The billets cut in this manner enter a container and are extruded with controlled pressure by pushing the billets through the die.

Before being cut, the cylindrical metal logs are heated to a temperature of about 500 °C in furnaces to be brought to the plastic state and then to be extruded. Once a first portion is cut, the remaining portion of cylindrical metal log is to be re-loaded and to be heated again to allow a successive cutting.

Re-loading mechanisms are known which usually comprise a cylinder capable of pushing the log into the furnace again. A cutting device for the cylindrical metal logs is usually positioned close to the furnace and sliding mechanisms allow the log to slide from the furnace to the cutting device and vice versa.

For example, US-7047784B2 describes a system for re-loading logs to be cut during the preparation of billets for extrusion. Said system provides the use of a circular blade adapted to cut a metal log and a pusher bar adapted to push the log to be cut again into the furnace for a further heating. The circular blade is arranged immediately outside the furnace, between the pusher bar and the furnace itself.

Also US-2009/0173128 shows a pusher bar arranged downstream of the cutting blade with respect to the advancement direction of the log, from the furnace towards the cutting blade, said pusher bar providing only a translational movement in direction of the furnace.

Disadvantageously, said re-loading pusher bars in conjunction with the driving devices thereof occupy much space, thus increasing the overall dimensions of the whole plant for the production of billets for extrusion.

Another disadvantage is given by the fact that once cutting a billet is finished, the circular blade is to be raised or moved to allow the pushing bar to push the cylindrical log into the furnace, thus causing a significant waste of time.

It is the object of the present invention to obtain a re-loading device which allows a reduced space to be occupied and which may be very close both to the cutting blade and to the furnace so as to limit the cooling of the cut log to be re-loaded.

It is a further object to obtain a re-loading device which allows a quick re-loading of metal logs into a furnace, thus allowing savings in terms of time and money.

According to the invention, such objects are achieved with a re-loading device as disclosed in claim 1.

It is a second object of the present invention to obtain a production plant of billets to be used in successive pressing operations ,which allows preparing the billets in a much quicker manner and with less overall dimensions with respect to that described in the prior art.

According to the invention, such an object is achieved with a production plant of billets as disclosed in claim 8.

It is a third object to obtain a method for re-loading metal logs into a furnace which allows space and time savings, while ensuring more production cycles of billets for pressing processes.

According to the invention, such an object is achieved with a method as disclosed in claim 11.

The innovative re-loading device allows the time required to perform the whole cutting cycle of a single metal log into a plurality of billets to be reduced because the re-loading time required after each cut is reduced. The cutting frequency increases thus increasing the time in which the metal log remains in the furnace, thus ensuring a more homogeneous heating and less gas consumptions of the furnace.

Advantageously, the re-loading device is positioned between the blade of the cutting device and the furnace, so that the re-loading process may start even before the blade is raised.

These and other features of the present invention will become more apparent from the following detailed description of a practical example embodiment thereof, shown by way of non-limitative example in the accompanying drawings, in which:
Figure 1 shows a perspective view of a portion of a plant for the production of billets comprising a re-loading device and a cutting device in a cutting position;
Figure 2 shows an enlarged perspective view of a portion of the re-loading device;
Figure 3 shows a perspective view of the portion of plant of Figure 1 in which a metal log to be re-loaded into a furnace was retracted by means of detachment means of the re-loading device;
Figure 4 shows a perspective view of the portion of plant of Figure 1 in which a pusher bar of the re-loading device is aligned and in contact with the metal log to be re-loaded into a furnace;
Figure 5 shows a perspective view of the portion of plant of Figure 1 in which the detachment means have released the metal log to be re-loaded into a furnace, which is pushed into a furnace by the pusher bar;
Figure 6 shows a perspective view of the portion of plant of Figure 1 in which the metal log is re-loaded into the furnace;
Figure 7 shows a first perspective view of a portion of the plant for the production of billets comprising a re-loading device between a blade of the cutting device and the furnace;
Figure 8 shows a second perspective view of the portion of the plant of Figure 7;
Figure 9 shows a side view of the portion of the plant of Figure 7.

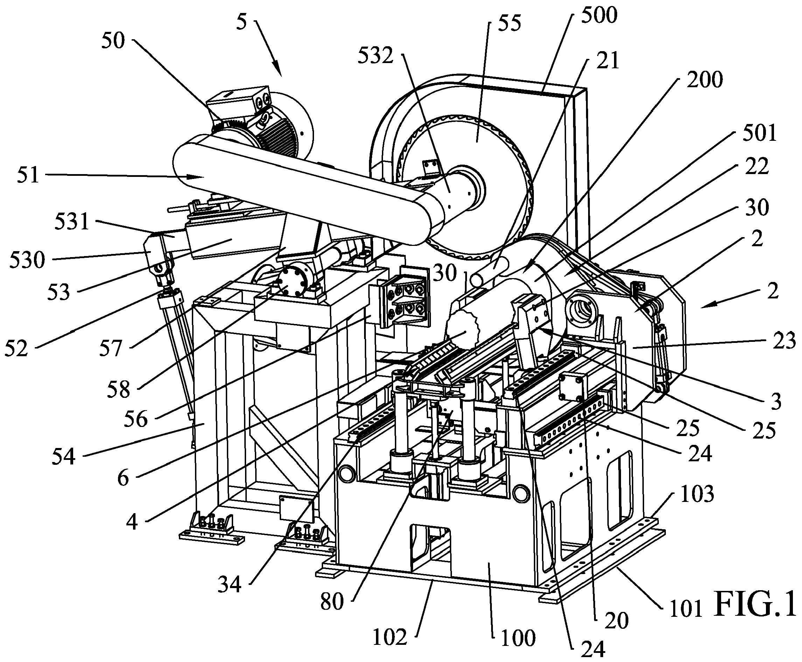

A re-loading device 2 into a furnace comprises a slide 23 to which it is rotatably connected a movable arm 22 with which a pusher bar 21 is integral (Figure 1). The re-loading device 2 further comprises detachment means 3 adapted to grip and move a cylindrical metal log 6, and a hydraulic cylinder 20 adapted to move the slide 23.

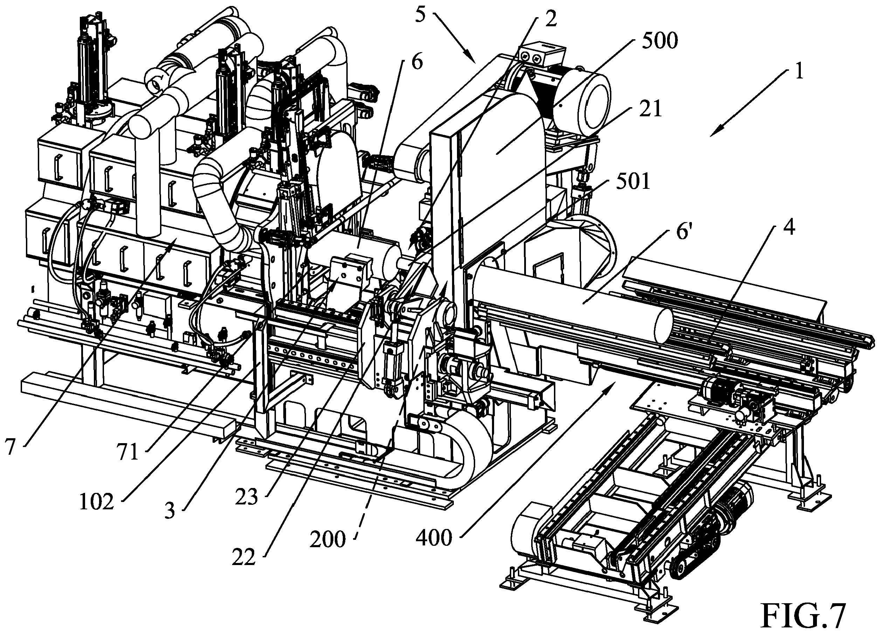

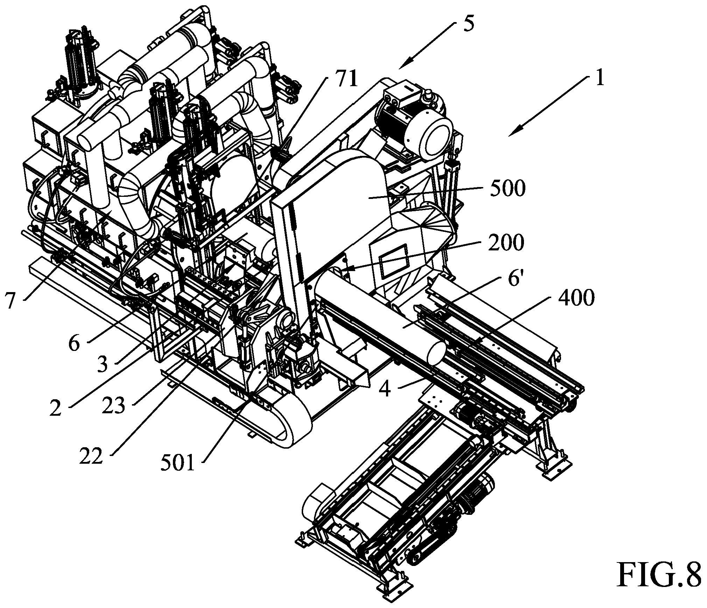

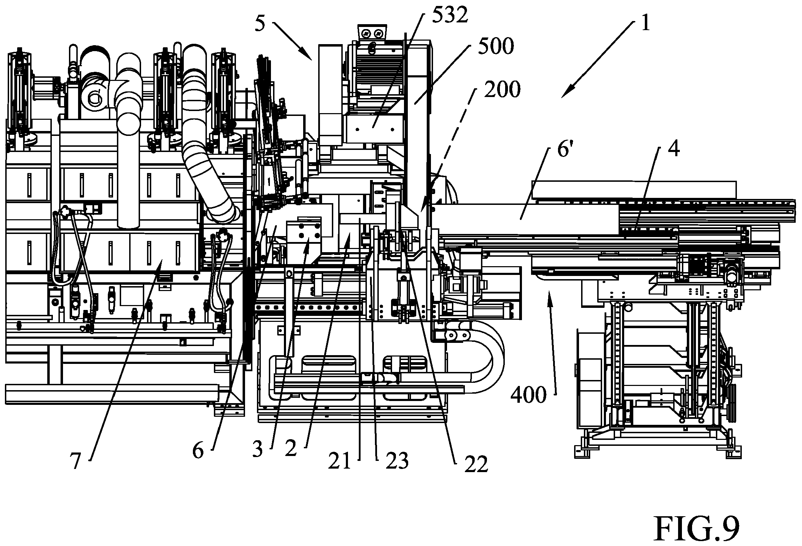

The re-loading device 2 may be used in a plant 1 for the production of billets 6' comprising sliding means 4 of the metal logs 6, a cutting device 5 and a furnace 7 (Figures 7 to 9).

The re-loading device 2 and the sliding means 4 are positioned on a first bench 100 which provides a first side 101 oriented according to the sliding direction of the metal log 6, and a second side 102 oriented orthogonal to said first side 101.

The sliding means 4 are also provided into the furnace 7 and continue up to the bench 100, allowing the translation of the metal log 6 up to the re-loading device 2 and the cutting device 5.

Said sliding means 4 continue also on a bench 400 for collecting the billet 6', downstream of the cut.

The detachment means 3 are in a middle position of the bench 100, about the sliding means 4 on which the metal log 6 slides to be cut by the cutting device 5.

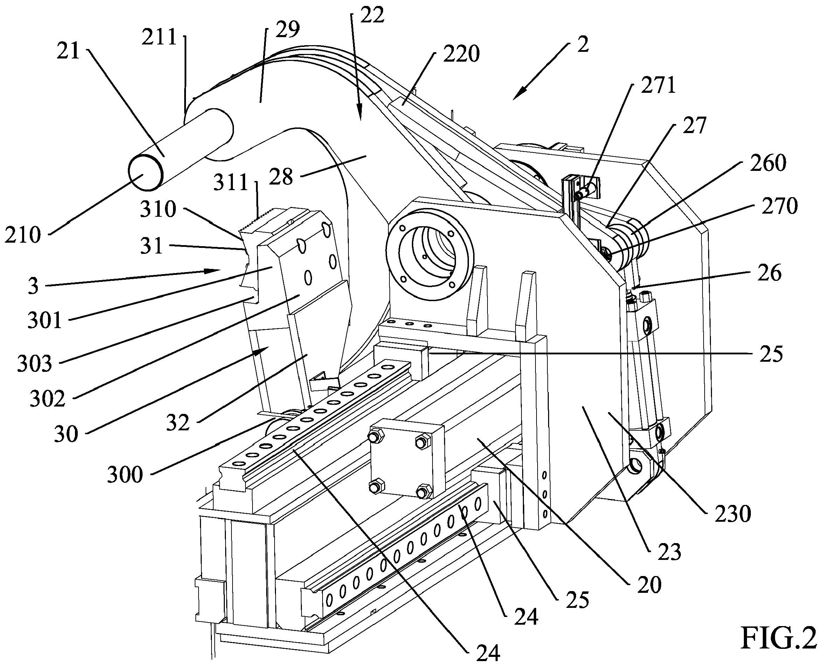

The movable arm 22 comprises a linear portion 28 and a curved portion 29 (Figure 2). The pusher bar 21 is perpendicularly fixed to an end 211 of the curved portion 29 of said movable arm 22, extending along the sliding direction of the metal log 6 parallel to the side 101 of the bench 100.

Said pusher bar 21 in turn comprises a flat end 210 adapted to come into contact with a cross section of the metal log 6 coming from the furnace 7 (from left to right observing the drawings, in particular Figures 7 to 9), specifically the section defined by the cut.

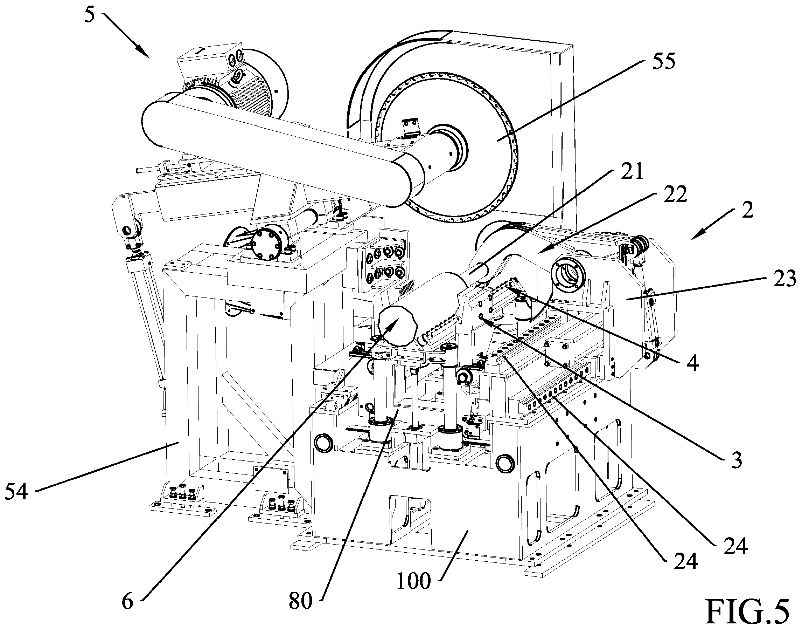

It is worth noting that the metal log 6 in Figures 1, 3 to 6 is depicted "cutaway" for convenience, but in reality it is much longer, at least partly extending into the furnace 7 also after the cut if it is still very long because subjected to many consecutive cuts.

After many cuts, the metal log 6 may have a length similar to the billet 6' after the cut.

Similarly, it is worth noting that only the end part of the furnace 7 is depicted in Figures 7 to 9, which instead is much longer, thus being capable of housing metal logs 6 which are much longer than the billet 6' depicted in said Figures 7 to 9.

A support 27 connected to the movable arm 22 is connected to a hydraulic cylinder 26. Said support 27 is fixed to an upper side 220 of the movable arm 22 and is connected to the hydraulic cylinder 26 by a joint 260. The movable arm 22 is articulated with respect to the slide 23 due to the presence of the hydraulic cylinder 26.

The support 27 and said hydraulic cylinder 26 form an internal angle of about 130° in a resting position of the hydraulic cylinder 26 (Figure 1).

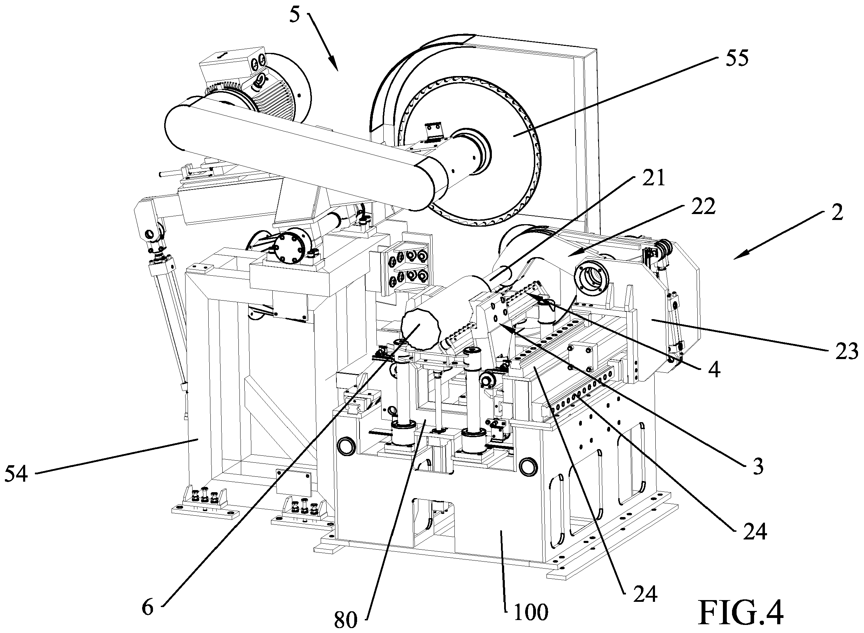

Following the inlet of hydraulic fluid, the cylinder 26 is adapted to be raised and to cause the tilting of the support 27 up to reaching an internal angle of about 90° (Figure 4). The variation of the internal angle between the support 27 and the hydraulic cylinder 26 is adapted to cause the lowering of the movable arm 22 towards the bench 100.

A stroke end stop 271 is adapted to block the inclination of the movable arm 22 towards the bench 100. Said stroke end stop 271 is adapted to be inserted into a hole 270 arranged on the joint 260 between the further hydraulic cylinder 26 and the support 27.

As the pressure of the hydraulic fluid decreases, the further hydraulic cylinder 26 is adapted to descend, thus causing the raising of the movable arm 22 and returning the support 27 to the initial position, i.e. with an internal angle of about 130° between said support 27 and the further hydraulic cylinder 26.

The slide 23 of the re-loading device 2 comprises at least two sliding inserts 25 adapted to slide along parallel sliding guides 24 rotated by 90° from each other, and adapted to allow a horizontal sliding of the slide 23 along the sliding direction of the metal log 6.

The hydraulic cylinder 20 is positioned between the sliding guides 24 and it extends along the sliding direction of the metal log 6 too.

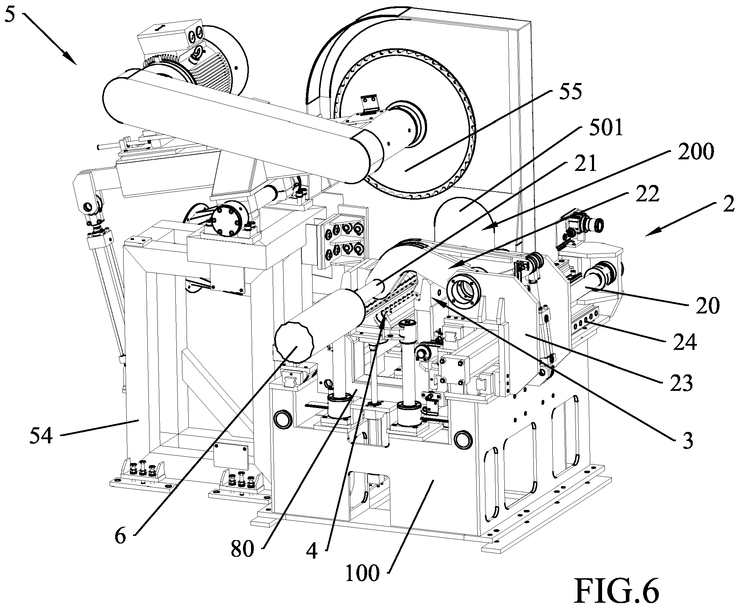

The slide 23 is adapted to slide on the sliding guides 24 up to a maximum extension of the hydraulic cylinder 20 (Figure 6).

The detachment means 3 preferably are positioned on a slide 80 sliding along sliding guides 34 in the sliding direction of the metal log 6.

As shown in Figure 2, the detachment means 3 consist for example of at least two gripping elements 30, each of which comprises a body 32, a gripping portion 31 and a base 300 rotatably associated with slide 80.

The gripping elements 30 are rotatably associated with slide 80 so as to tilt towards the metal log 6, gripping it (Figure 1).

The gripping portion 31 is arranged at an upper end 301 of each gripping element 30 and is provided with at least two inclined walls 310 comprising teeth 311 adapted to increase the friction (Figure 2).

The sliding means 4, for example a roller unit or a belt, are positioned between the gripping elements 30 and extend along the sliding direction of the metal log 6, from the inside of the furnace 7 up to the re-loading device 2 and to the cutting device 5, and again extend over the bench 400 for collecting the billet 6'.

The cutting device 5 is positioned on a second bench 54 in front of the first bench 100. Said cutting device 5 comprises a motor 50, a transmission arm 51, a hydraulic cylinder 52, a support 53 and a blade 55, e.g. a circular blade.

The blade 55 is contained in a box-like frame 500. A cover was removed in Figures 1, 3 to 6, to allow said blade 55 to be seen. Vice versa, the blade 55 cannot be seen in Figures 7 to 9, a vertical slot 505 instead being visible along which a rotating spindle may slide vertically, the spindle being adapted to control the rotation of the blade 55.

The frame 500 is fixed to the second bench 54 by fixing means 56.

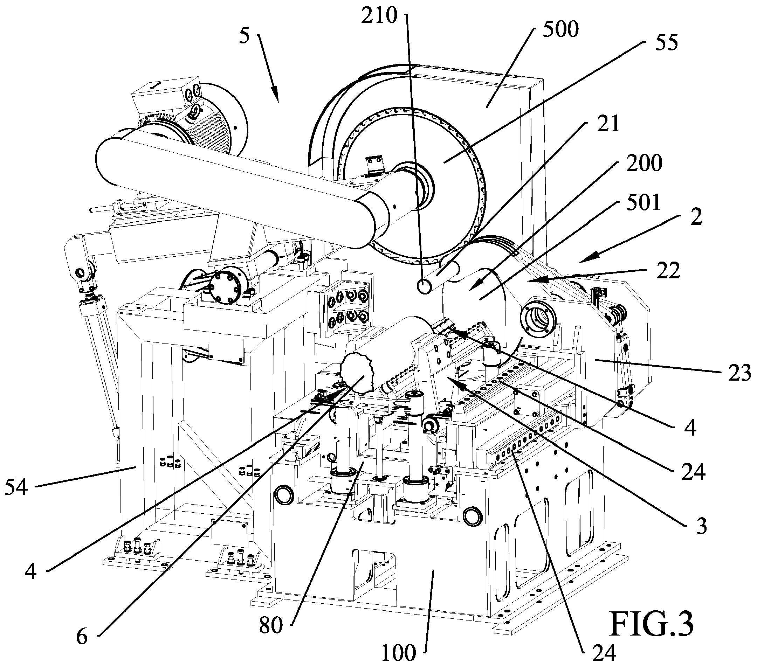

Said frame 500 comprises an opening 501 (Figure 3).

The motor 50 is adapted to transmit the power to the blade 55 by the transmission arm 51.

The hydraulic cylinder 52 is associated with the second bench 54 according to a lying inclined of about 30° with respect to the vertical. The hydraulic cylinder 52 is connected, through a joint 530, to a first end 531 of support 53, while the blade 55 of the cutting device 5 is connected to a spindle (not shown) at an end of an arm 532 of the transmission arm 51.

As already noted, the blade 55 is inside the frame 500 and moves vertically.

The motor 50 and the transmission arm 51 are upheld by the support 53, which in turn rests on sliding means 57. Said sliding means 57 rest on rotation means 58, which in turn are in contact with the second bench 54.

Advantageously, due to the rotation means 58, to the sliding means 57 and to the support 53, the arm 51 may reach various positions, thus allowing the blade 55 to accurately cut the metal log 6.

A plant 1 for the production of billets 6'comprises the re-loading device 2, the cutting device 5, the furnace 7.

Observing Figures 7 to 9, it is worth noting that the re-loading device 2 is arranged between the furnace 7 (to the left) and the cutting area 200 in which the blade 55 is adapted to be lowered, thus cutting the metal log 6.

The bench 400 is arranged downstream of the cutting area 200 and it is adapted to house the billet 6' which then undergoes an extrusion process.

As regards the operation, a multiplicity of metal logs 6 is positioned in series on the sliding means 4 inside the furnace 7 to be heated.

By noting in particular Figures 7 to 9, the logs 6 move in plant 1 from left to right.

The metal log 6 to be cut is heated into the furnace 7, which outlet mouth 71 is close to the side 102 of bench 100.

After being heated, the metal log 6 slides on the sliding means 4 outside the furnace 7 through the mouth 71 towards the opening 501 of the wall 500: log 6 is gripped by the detachment means 3 which lock it in a position suitable for cutting, upstream of said opening 501, according to the size desired of billet 6'.

Before the cut, log 6 protrudes from opening 501 (to the right) by a size depending on the sizes of the desired billet 6'.

Once the correct cutting position is obtained, the blade 55 of the cutting device 5 is lowered until it reaches the metal log 6, thus cutting it.

Once the cut has been made, the blade 55 of the cutting device 5 is raised again.

The billet 6' continues its path past the wall 501 on the bench 400 to then reach an extrusion press (not shown).

The metal log 6 blocked by the detachment means 3 is to be re-loaded into the furnace 7 to re-establish an optimal temperature for the cut.

The re-loading occurs according to the following steps in sequence:
- the detachment means 3 move the metal log 6 towards the furnace 7 (to the left noting Figures 7 to 9) by a stretch substantially equal to the length of the pusher bar 21 (Figure 3);
- the movable arm 22 rotates, thus allowing the pusher bar 21 to be aligned with the metal log 6;
- the detachment means 3 release the metal log 6;
- the slide 23 moves towards the furnace 7 (again to the left observing Figures 7 to 9) so that the flat end 210 of said pusher bar 21 comes into contact with a flat end of the metal log 6, thus pushing again the metal log 6 into the furnace 7 through the mouth 71.

It is worth noting that the slides 23 and 80 move in the same direction but independently with respect each other.

It is also worth noting that the adverb substantially used above is intended to highlight that the space covered by the slide 80 is slightly greater than the length of the pusher bar 21 so as to avoid dangerous interferences between the pusher bar 21 and the metal log 6 when the alignment occurs. Said space also considers the space, in the sliding direction of the metal log 6, of the overall dimensions of the movable arm 22 and of the distance between said movable arm 22 and the blade 55.

Advantageously, the re-loading device 2 is positioned between the blade 55 of the cutting device 5 and the furnace 7 (Figures 7 to 9, in which the furnace 7 is to the left and the blade 55 is to the right), so that the re-loading process may start even before the blade 55 is raised.

The support bench 100 of the re-loading device 2 faces the bench 54 of the cutting device 5, thus reducing the overall dimensions of plant 1, while the blade 55 remains past the re-loading device 2.

The innovative re-loading device 2 allows the time required to perform the whole cutting cycle of a single metal log 6 into a plurality of billets 6' to be reduced, even about 30% less, (from 35 to 25 seconds) because the re-loading time required after each cut is reduced. The cutting frequency increases thus increasing the time in which the metal log 6 remains into the furnace, thus ensuring a more homogeneous heating and less gas consumptions of the furnace 7.

## Claims

1. A device (2) for re-loading metal logs (6) into a furnace, comprising a pusher bar (21) adapted to come into contact with said metal logs (6), **characterized in that** it also comprises a slide (23) adapted to slide in sliding guides (24), a hydraulic cylinder (20) adapted to move the slide (23) to which there is rotatably connected a movable arm (22) with which the pusher bar (21) is integral, and detachment means (3) adapted to grasp and move the metal logs (6) independently of said slide (23).

2. A re-loading device (2) according to claim 1, **characterized in that** the detachment means (3) comprise at least two gripping elements (30) adapted to tilt and slide in further sliding guides (34).

3. A re-loading device (2) according to claim 1 or 2, **characterized in that** the detachment means (3) are positioned on a further slide (80) sliding along further sliding guides (34), said slides (23, 80) moving in the same sliding direction as the metal log (6) but independently of one another.

4. A re-loading device (2) according to claim 3, **characterized in that** the gripping elements (30) are rotatably associated with the slide (80) so as to tilt towards the metal log (6) gripping it.

5. A re-loading device (2) according to any one of the preceding claims, **characterized in that** the pusher bar (21) extends along the sliding direction of the metal log (6) and is fixed perpendicular to an end (211) of the movable arm (22).

6. A re-loading device (2) according to any one of the preceding claims, **characterized in that** the movable arm (22) is actuated by a further hydraulic cylinder (26) independent of said hydraulic cylinder (20).

7. A re-loading device (2) according to any of claims 2-6, **characterized in that** each gripping element (30) comprises a base (300), a body (32) and a gripping portion (31) provided with at least two inclined walls (310) comprising teeth (311).

8. A plant (1) for the production of billets (1) comprising a re-loading device (2), sliding means (4) for metal logs (6), a cutting device (5) provided with a blade (55), and a furnace (7), **characterized in that**, considering the sliding direction of the metal log (6), the re-loading device (2) is positioned between the furnace (7) and a cutting area (200) wherein the blade (55) is adapted to be lowered, thus cutting the metal log (6).

9. A plant (1) according to claim 8, **characterized in that** the re-loading device (2) is according to any one of claims 1-7.

10. A plant (1) according to claim 9, **characterized in that** it provides a first bench (100) which supports said re-loading device (2) and a second bench (54) which supports said cutting device (5), said first bench (100) and said second bench (54) facing each other on opposite sides with respect to said sliding means (4) of the metal logs (6).

11. A method for re-loading of metal logs (6) into a furnace (7) in a plant (1) for the production of billets (6'), **characterized in that** it comprises the steps of
- gripping the metal log (6) by detachment means (3),
- moving the metal log (6) by the detachment means (3) towards the furnace (7),
- aligning a pusher bar (21) with the metal log (6) further to a rotation of a movable arm (22) which supports said pusher bar (21),
- releasing the metal log (6) from the detachment means (3),
- starting the motion of the pusher bar (21) towards the furnace (7) so as to realize a contact between the pusher bar (21) and the metal log (6), pushing the latter into the furnace (7) again.

12. A method according to claim 11, **characterized in that** the movement of the metal log (6) by the detachment means (3) towards the furnace (7) is substantially equal to the size of the pusher bar (21) of the movable arm (22).
